# EUROPÄISCHE PATENTSCHRIFT

(11) **EP 2 599 664 B1**
(45) Veröffentlichungstag und Bekanntmachung des Hinweises auf die Patenterteilung: **11.09.2019**
(21) Anmeldenummer: 12194736.0
(22) Anmeldetag: 29.11.2012
(51) Int. Cl.: B60P 3/34, B60P 3/07

(54) **Fahrzeug mit Ausschubeinheit**
Vehicle with ejection unit
Véhicule avec dispositif d'expulsion

(30) Priorität: 02.12.2011 DE 102011119987
(43) Veröffentlichungstag der Anmeldung: 05.06.2013
(73) Patentinhaber: Schuler Fahrzeugbau GmbH, 72224 Ebhausen (DE)
(72) Erfinder: Kirn, Holger, 72213 Altensteig (DE)
(74) Vertreter: Witte, Weller & Partner Patentanwälte mbB

(56) Entgegenhaltungen:
- US-A- 5 983 576
- US-A1- 2007 257 511
- US-A1- 2011 057 475
- US-B1- 6 170 903

## Beschreibung

Die vorliegende Erfindung betrifft ein Fahrzeug mit einem durch eine Wand begrenzten Transportraum, und zumindest einer in eine Öffnung in der Wand eingesetzte Ausschubeinheit, die zwischen einer eingefahrenen und einer ausgefahrenen Position beweglich ist, wobei die Ausschubeinheit ein Bodenelement, ein Deckenelement, ein Außenwandelement und Seitenwandelemente aufweist.

Ein solches Fahrzeug ist beispielsweise aus der Druckschrift DE 20 2008 007 633 U1 bekannt. Auch die Anmelderin hat derartige Fahrzeuge im Programm, die über Ausschubeinheiten verfügen (allgemein auch als "Pop-out" bezeichnet), mit deren Hilfe der zur Verfügung stehende Innenraum deutlich vergrößerbar ist.

Ein Fahrzeug mit einer Ausschubeinheit ist ebenfalls aus der Druckschrift US 5,983,576 A oder US2007/0257511 A1 bekannt.

Obgleich sich Fahrzeuge mit Ausschubeinheiten in der Praxis sehr bewährt haben, bleibt weiterhin der Wunsch bestehen, die Flexibilität solcher Fahrzeuge weiter zu erhöhen, insbesondere die Flexibilität im Transportraum.

Die Aufgabe der vorliegenden Erfindung besteht deshalb darin, ein Fahrzeug der vorgenannten Art so weiterzubilden, dass eine erhöhte Transportraumflexibilität erreicht wird.

Diese Aufgabe wird bei dem eingangs genannten Fahrzeug dadurch gelöst, dass die Seitenwandelemente zumindest zweiteilig aufgebaut sind und einen oberen und einen unteren Seitenwandabschnitt aufweisen, und dass bei eingefahrener Ausschubeinheit einer der beiden Seitenwandabschnitte über den anderen Seitenwandabschnitt vertikal verlagert oder herausgenommen wird, so dass sich ein zum Transportraum hin offener Seitenwandausschnitt ergibt.

Das heißt mit anderen Worten, dass der Transportraum bei eingefahrener Ausschubeinheit durch den nach innen offenen Seitenwandausschnitt keine Begrenzung erfährt und damit sehr flexibel einsetzbar ist. Insbesondere ergibt sich im Bereich des offenen Seitenwandausschnitts ein über die gesamte Breite nutzbarer Transportraum. Dieser Transportraum lässt sich dann flexibel und vielseitig nutzen.

Erfindungsgemäß ist ebenfalls ein Ladeboden innerhalb des Transportraums vorgesehen, der zwischen einer Ladeposition und einer Wohnposition höhenverstellbar ist, wobei der Seitenwandausschnitt so ausgestaltet ist, dass er in den zwischen Ladeboden und Wand begrenzten Transportraum eingreift, wenn sich die Ausschubeinheit in der eingefahrenen Position befindet.

Das heißt mit anderen Worten, dass der Ladeboden auch jenen Bereich des Transportraums nutzt, der durch den offenen Seitenwandausschnitt freigegeben wird. Damit kann sich der Ladeboden über die gesamte Breite des Transportraums erstrecken und wird nicht durch nach innen ragende Seitenwandelemente bei eingefahrener Ausschubeinheit gestört.

Besonders bevorzugt ist der obere Seitenwandabschnitt verlagerbar, insbesondere verschiebbar ausgebildet.

Das heißt mit anderen Worten, dass vor dem Einfahren der Ausschubeinheit in die eingefahrene Position die oberen Seitenwandabschnitte nach unten verlagert werden, so dass der obere Seitenwandbereich offen ist, also auch kein senkrecht verlaufendes inneres Rahmenelement vorhanden ist.

Bevorzugt ist der obere Seitenwandabschnitt verstärkt ausgebildet, und zwar vorzugsweise U-förmig, so dass er bei der Verlagerung nach unten den unteren Seitenwandabschnitt zwischen sich aufnimmt.

Der Vorteil einer solchen Ausgestaltung liegt insbesondere darin, dass die Stabilität/Steifigkeit damit erhöht wird.

Bevorzugt wird die Ladeposition so gewählt, dass der sich darunter befindliche Raum eine Höhe aufweist, die zur Aufnahme von Stühlen und Tischen ausreicht und dass der sich darüber befindliche Raum zum Transport von Gütern, insbesondere Rennfahrzeugen, eignet.

Insbesondere wird die Höhe des sich über dem Ladeboden befindlichen Raums in der Ladeposition auf mindestens 1,40 m eingestellt, so dass zumindest niedere Fahrzeuge dort Platz finden. Der darunterliegende Raum ist dabei hoch genug, um beispielsweise Tische und Stühle eines Büroraums aufzunehmen. Der Vorteil dieser Lösung ist darin zu sehen, dass die Möbel des Büroraums verbleiben können, wenn der Ladeboden nach unten gefahren wird, um beispielsweise ein Fahrzeug zu transportieren.

Besonders bevorzugt ist das Fahrzeug ein Sattelauflieger bzw. Sattelzugauflieger, der mit einer Sattelzugmaschine koppelbar ist. Selbstverständlich kann das Fahrzeug auch als Kraftfahrzeug ausgebildet sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung.

Die Erfindung wird nun anhand von Ausführungsbeispielen und der beiliegenden Zeichnungen näher erläutert. Dabei zeigen:
- Fig. 1: eine schematische Darstellung eines Sattelzugaufliegers im Längsschnitt;
- Fig. 2: eine Draufsicht des Sattelzugaufliegers;
- Fig. 3: eine Querschnittsansicht eines vorderen Längsabschnitts des Sattelzugaufliegers;
- Fig. 4: eine schematische Draufsicht des vorderen Abschnitts des Sattelzugaufliegers;
- Fig. 5: eine schematische Darstellung des Sattelzugaufliegers mit ausgefahrenen Ausschubeinheiten;
- Fig. 6: eine Seitenansicht des Sattelzugaufliegers mit eingezeichneten Schnittebenen;
- Fig. 7: eine schematische Darstellung einer Ausschubeinheit zur Erläuterung der Erfindung; und
- Fig. 8: eine schematische Darstellung eines Seitenwandelements einer Ausschubeinheit.

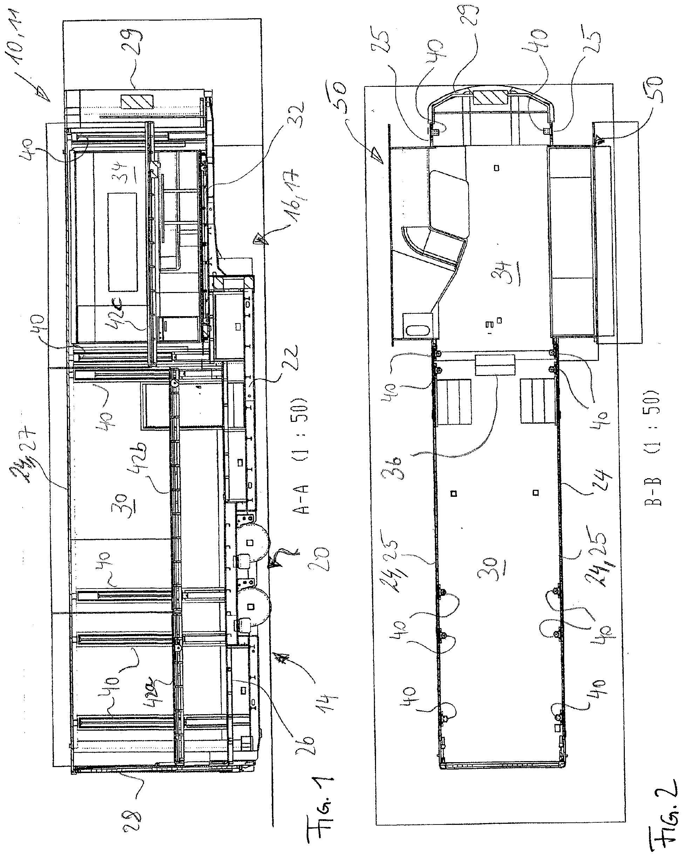

In Fig. 1 ist ein als Sattelzugauflieger 11 ausgebildetes Fahrzeug 10 in einer schematischen Schnittansicht dargestellt. Da der grundsätzliche Aufbau eines solchen Sattelzugaufliegers (nachfolgend kurz Auflieger genannt) allgemein bekannt ist, wird darauf nachfolgend nicht weiter eingegangen. Der in Fig. 1 gezeigte Auflieger 11 gliedert sich in zwei Längsabschnitte, nämlich einen hinteren Längsabschnitt 14 und einen vorderen Längsabschnitt 16, die sich durch unterschiedliche Bodenniveaus unterscheiden. Der Boden des vorderen Längsabschnitts 16 liegt etwas höher, da in diesem Bereich die Kupplung zur Verbindung mit einem Zugfahrzeug vorgesehen ist. Allgemein wird dieser vordere Längsabschnitt 16 auch als Schwanenhals 17 bezeichnet.

Der in Fig. 1 gezeigte Auflieger 11 weist ein zweiachsiges Fahrgestell 20 auf, das mit einem Fahrzeugrahmen 22 verbunden ist. An dem Fahrzeugrahmen 22 sind Wände 24 angebracht, die einen Transportraum 30 im hinteren Längsabschnitt und einen Transportraum 34 im vorderen Längsabschnitt 16 begrenzen.

Üblicherweise umfassen die Wände 24 zwei Seitenwände 25, einen Boden 26, ein Dach 27 sowie eine Ladetür 28 und eine Stirnwand 29.

Wie bereits erwähnt, sind die Höhenniveaus der Böden 26, 32 im hinteren Längsabschnitt und im vorderen Längsabschnitt unterschiedlich, wobei eine Treppe 36 im Innenraum des Aufliegers diesen Unterschied überwindet.

Innerhalb der Transporträume 30, 34 sind, wie in Fig. 1 und 2 zu erkennen, vertikale Träger 40 seitlich angebracht, die Ladeböden 42a, 42b, 42c stützen, um auf diese Weise eine sogenannte Doppelstockbeladung zu ermöglichen. Die vertikalen Träger 40 verfügen beispielsweise über elektrische Spindelantriebe, um die Ladeböden 42 in der Höhe verstellen zu können. Mithilfe dieser Verstellbarkeit der Ladeböden 42 ist es beispielsweise möglich, ein Fahrzeug durch den hinteren Längsabschnitt auf den Ladeboden 42c im vorderen Längsabschnitt 16 zu transportieren.

An dieser Stelle sei angemerkt, dass es auch andere Ausgestaltungen zur Verstellung der Ladeböden gibt, bspw. mechanische, pneumatische oder hydraulische unterstützte Systeme.

Im vorderen Längsabschnitt 16 sind in entsprechenden Öffnungen in den beiden Seitenwänden 25 Ausschubeinheiten 50 eingesetzt, die auch als Popouts allgemein bekannt sind. Diese Ausschubeinheiten 50 lassen sich rechtwinklig zur Längsrichtung des Fahrzeugs ausfahren, um auf diese Weise die Breite des Transportraums (der dann als Wohnraum genutzt werden kann) zu vergrößern.

Im eingefahrenen Zustand schließen die Ausschubeinheiten bündig mit den Seitenwänden 25 des Fahrzeugs ab, so dass in Längsrichtung des Fahrzeugs gesehen eine einheitliche Breite vorhanden ist.

In dem in den Figuren gezeigten Ausführungsbeispiel ist jeweils eine Ausschubeinheit 50 an einer Längsseite des Fahrzeugs vorgesehen. Selbstverständlich ist es auch denkbar, beispielsweise nur eine Ausschubeinheit vorzusehen.

Grundsätzlich weist eine Ausschubeinheit 50 ein Außenwandelement 52 auf, das im eingefahrenen Zustand der Ausschubeinheit die in der Seitenwand 25 vorgesehene Öffnung vollständig und bündig schließt. Ferner sind ein Deckenelement 54, ein Bodenelement 56, ein darüber liegender Boden 57 und zwei Seitenwandelemente 58 vorgesehen, die - im ausgefahrenen Zustand - den zusätzlichen Transportraum nach außen hin begrenzen. Das Bodenelement 56 ist bevorzugt als teleskopartig aus- und einfahrbares Trägerelement ausgestaltet.

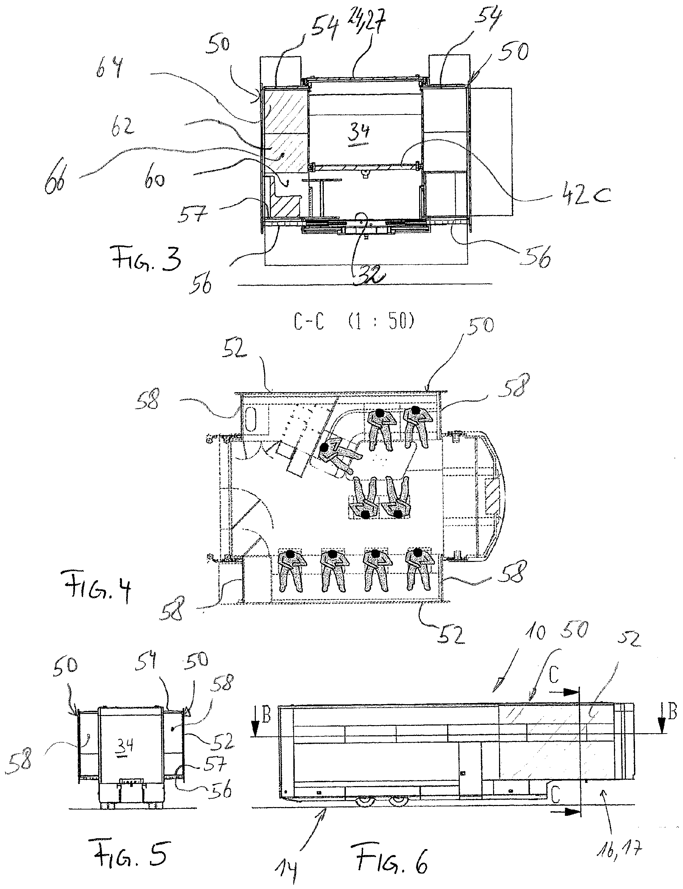

In Fig. 3 ist zu erkennen, dass sich das teleskopartig ausfahrbare Bodenelement 56 unter den Boden 32 des vorderen Längsabschnitts 16 und der Boden 57 über den Boden 32 schiebt, wenn die Ausschubeinheit 50 aus der ausgefahrenen in die eingefahrene Position gebracht wird. Das Deckenelement 54 schiebt sich dabei ebenfalls nach innen und liegt dicht unterhalb des Dachs 27. Die durch Deckenelement 54 und Boden 57 begrenzte Höhe der Ausschubeinheit 50 entspricht somit in etwa der Höhe des Transportraums zwischen dem Boden 32 und dem Dach 27.

Zum Ein- und Ausfahren einer Ausschubeinheit 50 können unterschiedliche Antriebe eingesetzt werden, beispielsweise elektrische, vorzugsweise Spindelantriebe, pneumatische oder hydraulische Antriebssysteme.

Die beiden Seitenwandelemente 58 sind mehrteilig aufgebaut, beispielsweise zwei- oder dreiteilig. Ein Seitenwandelement 58 gliedert sich beispielsweise in ein unteres Seitenwandteil 60, ein mittleres Seitenwandteil 62 und ein oberes Seitenwandteil 64, wie in Fig. 3 schematisch angedeutet ist. Das untere Seitenwandteil 60 ist starr verbunden mit dem Außenwandelement 52 und dem Bodenelement 56, während die beiden anderen Seitenwandteile 62 und 64 entweder in vertikaler Richtung verlagerbar gehalten oder herausnehmbar sind. Die Seitenwandteile sind dabei so ausgestaltet, dass sich eine geschlossene Fläche bildet, wenn die Ausschubeinheit 50 ausgefahren ist.

Soll die Ausschubeinheit 50 eingefahren werden, können das mittlere und das obere Seitenwandteil 62, 64 nach unten verlagert werden, so dass diese beiden Seitenwandteile 62, 64 hinter bzw. vor dem unteren Seitenwandteil 60 liegen. Diese Verlagerung der beiden Seitenwandteile 62, 64 lässt sich automatisch motorgetrieben durchführen, und zwar beispielsweise dann, wenn die Ausschubeinheit 50 eingefahren werden soll.

An dieser Stelle sei angemerkt, dass es selbstverständlich auch möglich ist, die Seitenwandteile 62, 64 herausnehmbar auszugestalten, so dass auf eine Verlagerung verzichtet werden kann.

Das Ergebnis der Verlagerung der beiden Seitenwandteile 62, 64 nach unten bzw. dem Herausnehmen der beiden Seitenwandteile ist ein nach innen zum Transportraum hin offener Seitenwandausschnitt, der in Fig. 3 auf der linken Seite schraffiert dargestellt und mit dem Bezugszeichen 66 gekennzeichnet ist. Dieser offene Seitenwandausschnitt 66 wird in vertikaler Richtung durch das Deckenelement 54 und die obere Kante des unteren Seitenwandteils 60 begrenzt. Folglich wird beim Einfahren der Ausschubeinheit 50 der Transportraum 34 nur im Bereich des unteren Seitenwandteils 60 eingeschränkt, nicht aber im Bereich des offenen Seitenwandausschnitts 66. Mit anderen Worten bleibt die in Längsrichtung einheitliche Breite des Transportraums erhalten, wohingegen das untere Seitenwandteil beim Einfahren der Ausschubeinheit 50 in den Transportraum 34 hinein läuft und diesen damit begrenzt.

Praktisch gesehen muss der Transportraum 34 im Bereich der unteren Seitenwandteile 60 beim Einfahren der Ausschubeinheit 50 frei sein, während im darüber liegenden Transportraum aufgrund des offenen Seitenwandausschnitts 66 keine Beschränkungen vorliegen.

Mithilfe dieser verlagerbaren Seitenwandteile ist es möglich, den Ladeboden 42 in Ladeposition zu halten, die etwas höher ist als die Höhe des unteren Seitenwandteils 66, selbst wenn die Ausschubeinheit 50 eingefahren wird. Der oberhalb des Ladebodens 42 vorhandene Transportraum 34 ist damit voll nutzbar, selbst wenn die Ausschubeinheit 50 eingefahren ist.

Wie zuvor beschrieben, werden dass mittlere und das obere Seitenwandteil 62, 64 automatisch motorgetrieben verlagert, entweder in die untere Position vor dem Einfahren der Ausschubeinheit oder in die mittlere bzw. obere Position, nach dem Ausfahren der Ausschubeinheit 50. Neben dieser bevorzugten Variante ist es selbstverständlich auch denkbar, die beiden Seitenwandteile 62, 64 manuell zu verlagern oder beispielsweise herausnehmbar auszubilden. Im letztgenannten Fall müsste der Benutzer vor dem Einfahren der Ausschubeinheit 50 die beiden Seitenwandteile manuell herausnehmen, um den offenen Seitenwandausschnitt 66 zu schaffen.

Abhängig von der gewünschten verfügbaren Transportraumhöhe wird die Einteilung der Seitenwandteile vorgenommen. In dem in Fig. 3 gezeigten Beispiel ist das Seitenwandelement 58 dreiteilig aufgebaut, so dass sich eine sehr große verfügbare Transportraumhöhe ergibt. Genügt beispielsweise eine geringere Transportraumhöhe - bei eingefahrener Ausschubeinheit - so könnte das Seitenwandelement 58 beispielsweise auch zweiteilig aufgebaut werden, so dass nur ein Seitenwandteil verlagerbar bzw. herausnehmbar sein muss.

Selbstverständlich wäre es alternativ auch denkbar, das untere Seitenwandteil verlagerbar bzw. herausnehmbar auszugestalten und dafür ein darüber liegendes Seitenwandteil starr vorzusehen. In diesem Fall läge der offene Seitenwandausschnitt unten.

Der Vorteil des mehrteiligen Seitenwandaufbaus der Ausschubeinheiten 50 liegt darin, dass bei ausgefahrenen Ausschubeinheiten ein großer als Wohnraum bzw. Arbeitsraum nutzbarer Transportraum 34 zur Verfügung gestellt wird, sofern der Ladeboden 42 in der oberen Position ist und damit sozusagen die Decke dieses Raums bildet. In den Fig. 3 und 4 sind beispielhaft Tische und Stühle eingezeichnet. Bei eingefahrenen Ausschubeinheiten 50 kann nun der Ladeboden 42 aufgrund der offenen Seitenwandausschnitte 66 nach unten gefahren werden in eine Position (Ladeposition), die etwas höher liegt als das untere Seitenwandteil 60 (und in diesem Bereich vorhandene Möbel). Auf diesem Ladeboden 42 lässt sich dann beispielsweise ein Fahrzeug transportieren.

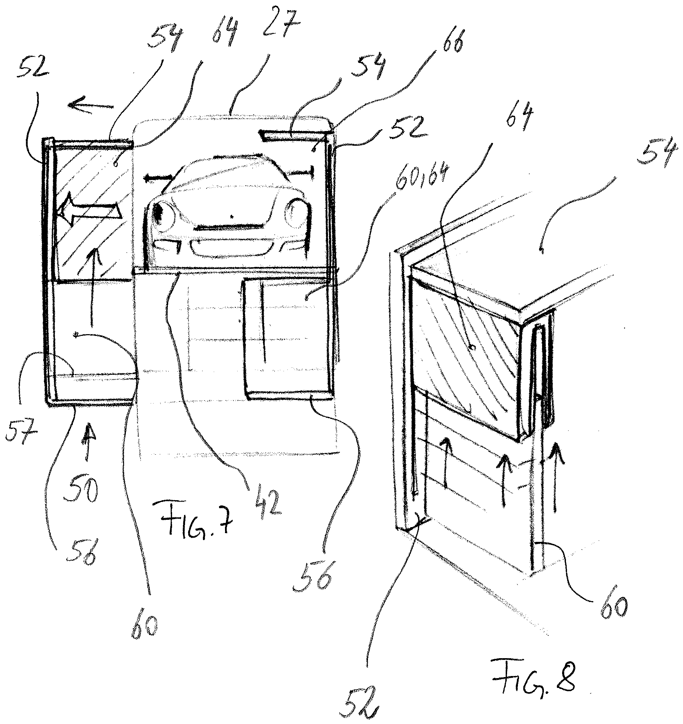

In Fig. 7 und 8 ist das erfindungsgemäße Konzept nochmals schematisch dargestellt. Bei dieser Darstellung umfasst das Seitenwandelement zwei Seitenwandteile 60, 64, wobei das obere Seitenwandteil 64 in vertikaler Richtung verlagerbar ist. Insbesondere in der rechten Hälfte der Darstellung in Fig. 7 ist deutlich zu erkennen, dass der obere Transportraum 34, in dem sich auf dem Ladeboden 42 ein Fahrzeug befindet, nicht durch Seitenwandelemente begrenzt wird. Der offene Seitenwandausschnitt 66 sorgt dafür, dass in diesem Bereich Güter im Transportraum 34 verbleiben können, auch wenn die Ausschubeinheit 50 in der eingefahrenen Position ist.

In Fig. 8 ist das obere verlagerbare Seitenwandteil 64 im Querschnitt U-förmig ausgebildet, so dass der zwischen den beiden Lagen gebildete Freiraum das starre Seitenwandteil 60 beim Verfahren nach unten aufnehmen kann. Selbstverständlich könnte dieses Prinzip auch umgekehrt ausgeführt werden, also mit einem zweilagigen unteren Seitenwandteil, das im nach unten gefahrenen Zustand das obere Seitenwandteil zwischen sich aufnimmt.

Zusammenfassend zeigt sich, dass der zwei- bzw. mehrteilige Seitenwandelement-Aufbau mit verlagerbaren bzw. herausnehmbaren Seitenwandteilen eine deutliche Aufwertung des zur Verfügung stehenden Transportraums ermöglicht, insbesondere weil mehr nutzbarer Transportraum bei eingefahrenen Ausschubeinheiten 50 zur Verfügung steht.

## Patentansprüche

1. Fahrzeug mit
einem durch eine Wand (24) begrenzten Transportraum (34), und
zumindest einer in eine Öffnung in der Wand eingesetzten Ausschubeinheit (50), die zwischen einer eingefahrenen und einer ausgefahrenen Position beweglich ist, wobei die Ausschubeinheit ein Bodenelement (56), ein Deckenelement (54), ein Außenwandelement (52) und Seitenwandelemente (58) aufweist,
**dadurch gekennzeichnet, dass**
die Seitenwandelemente (58) zumindest zweiteilig aufgebaut sind und einen oberen und einen unteren Seitenwandabschnitt (60, 62, 64) aufweisen, und
bei eingefahrener Ausschubeinheit einer der beiden Seitenwandabschnitte über den anderen Seitenwandabschnitt vertikal verlagert oder herausgenommen wird, so dass sich ein zum Transportraum hin offener Seitenwandausschnitt (66) ergibt, ein Ladeboden (42) innerhalb des Transportraums (34) vorgesehen ist, der zwischen einer Ladeposition und einer Wohnposition höhenverstellbar ist, wobei der Seitenwandausschnitt so ausgestaltet ist, dass er in den zwischen dem Ladeboden in der Ladeposition und der Wand (24) begrenzten Transportraum eingreift, wenn sich die Ausschubeinheit in der eingefahrenen Position befindet.

2. Fahrzeug nach Anspruch 1, **dadurch gekennzeichnet, dass** der Ladeboden über einen elektrischen Spindelantrieb oder einen mechanischen Antrieb höhenverstellbar ist.

3. Fahrzeug nach Anspruch 1 oder 2, **dadurch gekennzeichnet, dass** die Seitenwandabschnitte (60, 62, 64) eine geschlossene Fläche bilden, wenn sich die Ausschubeinheit in der ausgefahrenen Position befindet.

4. Fahrzeug nach einem der Ansprüche 1 bis 3, **dadurch gekennzeichnet, dass** der obere Seitenwandabschnitt (64) verlagerbar, insbesondere verschiebbar ausgebildet ist.

5. Fahrzeug nach Anspruch 4, **dadurch gekennzeichnet, dass** der untere Seitenwandabschnitt (60) und/oder der obere Seitenwandabschnitt (64) verstärkt ausgebildet ist.

6. Fahrzeug nach Anspruch 5, **dadurch gekennzeichnet, dass** der obere Seitenwandabschnitt (64) U-förmig ausgebildet ist und bei der Verlagerung nach unten den unteren Seitenwandabschnitt zwischen sich aufnimmt, oder der untere Seitenwandabschnitt (60) U-förmig ausgebildet ist und bei einer Verlagerung des oberen Seitenwandabschnitts nach unten diesen zwischen sich aufnimmt.

7. Fahrzeug nach einem der vorhergehenden Ansprüche, **dadurch gekennzeichnet, dass** das Bodenelement (56) in der eingefahrenen Position der Ausschubeinheit (50) unterhalb der den Transportraum nach unten begrenzenden Wand liegt.

8. Fahrzeug nach einem der vorhergehenden Ansprüche, **dadurch gekennzeichnet, dass** das Deckenelement (54) in der eingefahrenen Position der Ausschubeinheit unterhalb der den Transportraum nach oben begrenzenden Wand liegt.

9. Fahrzeug nach Anspruch 1, **dadurch gekennzeichnet, dass** die Ladeposition so gewählt ist, dass der sich darunter befindliche Raum eine Höhe aufweist, die zur Aufnahme von Stühlen und Tischen ausreicht und der sich darüber befindliche Raum zum Transport von Gütern, insbesondere Rennfahrzeugen, eignet.

10. Fahrzeug nach einem der vorhergehenden Ansprüche, **dadurch gekennzeichnet, dass** das Fahrzeug ein Sattelauflieger ist, der mit einer Sattelzugmaschine koppelbar ist.

11. Fahrzeug nach einem der vorhergehenden Ansprüche, **dadurch gekennzeichnet, dass** auf beiden Längsseiten des Fahrzeugs jeweils eine Ausschubeinheit vorgesehen ist.

12. Fahrzeug nach Anspruch 10, **dadurch gekennzeichnet, dass** die Ausschubeinheit im vorderen Bereich des Sattelaufliegers vorgesehen ist.

## Claims

1. Vehicle having a transport space (34) which is delimited by a wall (24), and at least one push-out unit (50) which is inserted into an opening in the wall and which is movable between a retracted and an extended position, wherein the push-out unit has a floor element (56), a ceiling element (54), an outer wall element (52) and side wall elements (58),
**characterized in that**
the side wall elements (58) are of at least two-part design and have an upper and a lower side wall portion (60, 62, 64), and, with the push-out unit retracted, one of the two side wall portions is vertically displaced over the other side wall portion or is removed, resulting in a side wall cutout (66) which is open towards the transport space, a loading floor (42) is provided within the transport space (34) which is height-adjustable between a loading position and a dwelling position, wherein the side wall cutout is configured in such a way that it engages in the transport space delimited between the loading floor in the loading position and the wall (24) if the push-out unit is situated in the retracted position.

2. Vehicle according to Claim 1, **characterized in that** the loading floor is height-adjustable via an electric spindle drive or a mechanical drive.

3. Vehicle according to Claim 1 or 2, **characterized in that** the side wall portions (60, 62, 64) form a closed surface if the push-out unit is situated in the extended position.

4. Vehicle according to one of Claims 1 to 3, **characterized in that** the upper side wall portion (64) is designed to be displaceable, in particular slidable.

5. Vehicle according to Claim 4, **characterized in that** the lower side wall portion (60) and/or the upper side wall portion (64) are or is of reinforced design.

6. Vehicle according to Claim 5, **characterized in that** the upper side wall portion (64) is U-shaped and, upon downward displacement, receives the lower side wall portion between itself, or the lower side wall portion (60) is U-shaped and, upon downward displacement of the upper side wall portion, receives the latter between itself.

7. Vehicle according to one of the preceding claims, **characterized in that**, in the retracted position of the push-out unit (50), the floor element (56) is situated below the wall which downwardly delimits the transport space.

8. Vehicle according to one of the preceding claims, **characterized in that**, in the retracted position of the push-out unit, the ceiling element (54) is situated below the wall which upwardly delimits the transport space.

9. Vehicle according to Claim 1, **characterized in that** the loading position is chosen such that the space situated therebelow has a height which is sufficient for receiving chairs and tables, and the space situated thereabove is suitable for transporting goods, in particular racing cars.

10. Vehicle according to one of the preceding claims, **characterized in that** the vehicle is a semitrailer which can be coupled to a tractor unit.

11. Vehicle according to one of the preceding claims, **characterized in that** a respective push-out unit is provided on both longitudinal sides of the vehicle.

12. Vehicle according to Claim 10, **characterized in that** the push-out unit is provided in the front region of the semitrailer.

## Revendications

1. Véhicule comprenant
un espace de transport (34) délimité par une paroi (24), et
au moins une unité d'éjection (50) qui est insérée dans une ouverture ménagée dans la paroi et qui est mobile entre une position rentrée et une position sortie,
l'unité d'éjection comprenant un élément inférieur (56), un élément supérieur (54), un élément formant paroi extérieure (52) et des éléments formant paroi latérale (58), **caractérisé en ce que**
les éléments formant paroi latérale (58) sont constitués d'au moins deux parties et comportent une partie formant paroi latérale supérieure et une partie formant paroi latérale inférieure (60, 62, 64) et
lorsque l'unité d'éjection est rentrée, l'une des deux parties formant paroi latérale est déplacée verticalement au-dessus de l'autre partie formant paroi latérale ou est retirée de façon à obtenir une découpe de paroi latérale (66) ouverte en direction de l'espace de transport,
un plancher de chargement (42) est prévu à l'intérieur de l'espace de transport (34), lequel plancher de chargement est réglable en hauteur entre une position de chargement et une position d'habitation, la découpe de paroi latérale étant conçue de manière à s'engager dans l'espace de transport délimité entre le plancher de chargement en position de chargement et la paroi (24) lorsque l'unité d'éjection est en position rétractée.

2. Véhicule selon la revendication 1, **caractérisé en ce que** le plancher de chargement est réglable en hauteur par un entraînement à broche électrique ou un entraînement mécanique.

3. Véhicule selon la revendication 1 ou 2, **caractérisé en ce que** les parties formant paroi latérale (60, 62, 64) forment une surface fermée lorsque l'unité d'éjection est en position sortie.

4. Véhicule selon l'une des revendications 1 à 3, **caractérisé en ce que** la partie formant paroi latérale supérieure (64) est conçue pour être déplaçable, en particulier coulissante.

5. Véhicule selon la revendication 4, **caractérisé en ce que** la partie formant paroi latérale inférieure (60) et/ou la partie formant paroi latérale supérieure (64) est conçue de manière renforcée.

6. Véhicule selon la revendication 5, **caractérisé en ce que** la partie formant paroi latérale supérieure (64) est en forme de U et reçoit en elle la partie formant paroi latérale inférieure lors du déplacement vers le bas, ou la partie formant paroi latérale inférieure (60) est en forme de U et reçoit en elle la partie de paroi latérale supérieure lorsque celle-ci se déplace vers le bas.

7. Véhicule selon l'une des revendications précédentes, **caractérisé en ce que** l'élément inférieur (56) est situé, lorsque l'unité d'éjection (50) est en position rentrée, au-dessous de la paroi délimitant l'espace de transport vers le bas.

8. Véhicule selon l'une des revendications précédentes, **caractérisé en ce que** l'élément supérieur (54) est situé, lorsque l'unité d'éjection est en position rentrée, au-dessus de la paroi délimitant l'espace de transport vers le haut.

9. Véhicule selon la revendication 1, **caractérisé en ce que** la position de chargement est choisie de telle sorte que l'espace sous-jacent ait une hauteur suffisante pour recevoir des chaises et des tables et que l'espace sus-jacent est adapté au transport de marchandises, en particulier de voitures de course.

10. Véhicule selon l'une des revendications précédentes, **caractérisé en ce que** le véhicule est une semi-remorque qui peut être attelée à un tracteur.

11. Véhicule selon l'une des revendications précédentes, **caractérisé en ce qu'**une unité d'éjection est prévue des deux côtés longitudinaux du véhicule.

12. Véhicule selon la revendication 10, **caractérisé en ce que** l'unité d'éjection est prévue dans la région avant de la semi-remorque.
